# EUROPEAN PATENT APPLICATION

(11) **EP 2 930 230 A1**
(43) Date of publication of application: **14.10.2015**
(21) Application number: 13861185.0
(22) Date of filing: 27.11.2013
(51) Int. Cl.: C10M 141/10, C09K 5/04, C10M 141/06, C10N 30/00, C10N 30/06, C10N 30/08, C10N 40/30

(54) **REFRIGERANT-OIL COMPOSITION AND COOLING-EQUIPMENT WORKING-FLUID COMPOSITION**

(30) Priority: 07.12.2012 JP 2012268308
(71) Applicant: JX Nippon Oil & Energy Corporation, Chiyoda-ku Tokyo 100-8162 (JP)
(72) Inventor: SAITO Masanori, Tokyo 100-8162 (JP); MATSUMOTO Tomonari, Tokyo 100-8162 (JP); ADEGAWA Kuniko, Tokyo 100-8162 (JP)
(74) Representative: Grünecker Patent- und Rechtsanwälte PartG mbB
(86) International application number: PCT/JP2013/081943
(87) International publication number: WO 2014/087903

(57) **Abstract**

The present invention provides a refrigerating machine oil composition comprising: a lubricating base oil; a compound represented by the following formula (1): 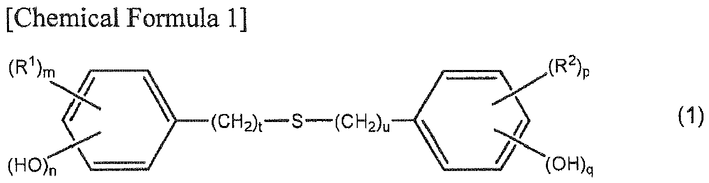 [R¹ and R² may be the same as or different from each other and each represents a hydrocarbon group; m, n, p and q may be the same as or different from each other and each represents an integer from 0 to 5 so that sums of m + n and p + q range from 0 to 5, respectively, with the proviso that at least either one of n or q is 1 or more; and t and u may be the same as or different from each other and each represents an integer from 0 to 10]; and a phosphorus compound, the refrigerating machine composition being used with an unsaturated hydrofluorocarbon refrigerant.

## Description

### Technical Field

The present invention relates to a refrigerating machine oil composition and a working fluid composition for a refrigerating machine, and more particularly, relates to a refrigerating machine oil composition which is useful when used with an unsaturated hydrofluorocarbon refrigerant and a working fluid composition for a refrigerating machine using the refrigerating machine oil composition.

### Background Art

In light of the problem of the ozone layer depletion in recent years, the regulation has been applied to CFCs (chlorofluorocarbons) and HCFCs (hydrochlorofluorocarbons) that have been conventionally used as refrigerants in refrigerating equipment, and HFCs (hydrofluorocarbons) have been coming into use for refrigerants in place of CFCs and HCFCs.

When CFCs or HCFCs are used as the refrigerants, hydrocarbon oils such as mineral oils or alkylbenzenes have been suitably used as the refrigerating machine oils; however, change in the refrigerants may cause the refrigerating machine oil, which is used in the coexistence of the refrigerant, to exhibit unpredictable behavior in terms of compatibility with the refrigerant, lubricity, refrigerant-dissolved viscosity, thermal/chemical stability and the like, and therefore different refrigerating machine oils have been required to be developed for the respective refrigerants. Accordingly, there have been developed, for example, polyalkylene glycols (see Patent Literature 1), esters (see Patent Literature 2), carbonates (see Patent Literature 3) and polyvinyl ethers (see Patent Literature 4) as the refrigerating machine oils for the HFC refrigerants. Among these refrigerating machine oils, the esters have been widely used for refrigerators and air conditioners.

Among the HFC refrigerants, HFC-134a, R407C and R410A have been used as standard refrigerants for automobile air conditioners, refrigerators or room air conditioners. However, these HFC refrigerants have high global warming potentials (GWPs), while ozone depletion potentials (ODPs) thereof are zero, and therefore the regulation has been being applied to these HFC refrigerants. It has therefore become an urgent issue to develop refrigerants that can be used in place of the above-described HFCs.

With these situations as a background, it has been proposed to use, as the refrigerants in place of the above-described HFCs, unsaturated hydrofluorocarbon refrigerants, of which both ODPs and GWPs are very low, which are nonflammable and are almost equivalent to the above-described HFCs in thermodynamic properties as measures of refrigerant performance. In addition, it has also been proposed to use mixed refrigerants of the unsaturated hydrofluorocarbon refrigerants with saturated hydrofluorocarbons, saturated hydrocarbons having 3 to 5 carbon atoms, dimethyl ether, carbon dioxide, bis(trifluoromethyl) sulfide or trifluoroiodomethane (see Patent Literature 5).

On the other hand, there have been proposed refrigerating machine oils that employ mineral oils, alkylbenzenes, poly-α-olefins, polyalkyleneglycols, monoesters, diesters, polyol esters, phthalate esters, alkyl ethers, ketones, carbonates, polyvinyl ethers or the like, as refrigerating machine oils that can be used with the unsaturated hydrofluorocarbon refrigerant or the mixed refrigerant of the unsaturated hydrofluorocarbon refrigerant and a saturated hydrofluorocarbon, a saturated hydrocarbon having 3 to 5 carbon atoms, dimethyl ether, carbon dioxide, bis(trifluoromethyl)sulfide or trifluoroiodomethane (see Patent Literature 5 and Patent Literature 6 and 7).

### Citation List

### Patent Literature

Patent Literature 1: Japanese Patent Application Laid-open No. 02-242888
Patent Literature 2: Japanese Patent Application Laid-open No. 03-200895
Patent Literature 3: Japanese Patent Application Laid-open No. 03-217495
Patent Literature 4: Japanese Patent Application Laid-open No. 06-128578
Patent Literature 5: International Publication No. WO2006/094303
Patent Literature 6: National Publication of International Patent Application No. 2006-512426
Patent Literature 7: International Publication No. WO2005/103190

### Summary of Invention

### Technical Problem

With respect to the hydrocarbons such as mineral oils and alkylbenzenes which have been used with the CFCs or HCFCs and the refrigerating machine oils such as polyalkylene glycols, polyol esters and polyvinyl ethers which have been used with HFCs, both thereof have been believed to be applicable to the refrigeration systems employing the unsaturated hydrofluorocarbon refrigerant as described in Patent Literature 5, 6 and 7. According to investigation by the present inventors, however, lubricity and thermal/chemical stability cannot be achieved at high levels by simply applying the conventional refrigerating machine oils which have been used with the refrigerants such as CFCs or HCFCs as they are to the systems of interest.

The present invention has been accomplished in view of such circumstances and object thereof is to provide a working fluid composition for a refrigerating machine capable of achieving both lubricity and thermal/chemical stability at high levels in a refrigeration system employing an unsaturated hydrofluorocarbon refrigerant.

### Solution to Problem

As a result of much diligent research directed toward accomplishing the object stated above, the present inventors have found that it can be achieved to obtain a refrigerating machine oil composition and a working fluid composition for a refrigerating machine having sufficient lubricity and thermal/chemical stability in the coexistence of a hydrofluorocarbon refrigerant by allowing a base oil to contain a specific compound, thereby completing the present invention.

In order to solve the problem described above, the present invention provides a refrigerating machine oil composition comprising a lubricating base oil, a compound represented by the following formula (1): 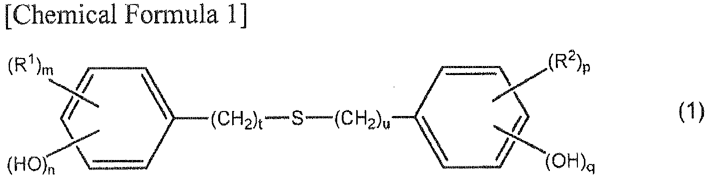 [R¹ and R² may be the same as or different from each other and each represents a hydrocarbon group; m, n, p and q may be the same as or different from each other and each represents an integer from 0 to 5 so that sums of m + n and p + q range from 0 to 5, respectively, with the proviso that at least either one of n or q is 1 or more; and t and u may be the same as or different from each other and each represents an integer from 0 to 10], and a phosphorus compound, wherein the refrigerating machine oil composition is used with an unsaturated hydrocarbon refrigerant.

The present invention also provides a working fluid composition for a refrigerating machine comprising a lubricating base oil, a compound represented by the above formula (1), a phosphorus compound and an unsaturated hydrofluorocarbon refrigerant.

### Advantageous Effects of Invention

According to the present invention, there can be provided a refrigerating machine oil composition capable of achieving all of lubricity and thermal/chemical stability at high levels when used with an unsaturated hydrofluorocarbon refrigerant, and a working fluid composition for a refrigerating machine using the same.

### Description of Embodiments

Hereinafter, preferred embodiments of the present invention will be described in detail.

### [First embodiment: refrigerating machine oil composition]

The refrigerating machine oil composition, which is used with an unsaturated hydrofluorocarbon refrigerant, according to a first embodiment of the present invention comprises a lubricating base oil, a compound represented by the following formula (1): 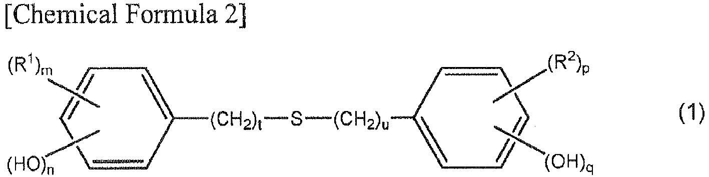 [R¹ and R² may be the same as or different from each other and each represents a hydrocarbon group; m, n, p and q may be the same as or different from each other and each represents an integer from 0 to 5 so that sums of m + n and p + q range from 0 to 5, respectively, with the proviso that at least either one of n or q is 1 or more; and t and u may be the same as or different from each other and each represents an integer from 0 to 10], and a phosphorus compound.

The lubricating base oil is not particularly limited, but specific examples thereof include hydrocarbon oils such as mineral oils, olefin polymers, naphthalene compounds and alkylbenzenes; ester base oils such as polyol esters, monoesters and diesters; and oxygen-containing synthetic oils such as polyglycols, polyvinyl ethers, ketones, polyphenyl ethers, silicones, polysiloxanes and perfluoroethers, and these lubricating base oils may be used singly or in combinations of two or more thereof. Regarding the oxygen-containing synthetic oils in the lubricating base oils described above, among others, the polyol esters, the polyglycols and the polyvinyl ethers are particularly preferably used.

The polyol ester is an ester synthesized from a polyvalent alcohol and a carboxylic acid. The polyvalent alcohols are preferably those having 2 to 6 of hydroxyl groups, and specific examples thereof include neopentyl glycol, trimethylolpropane, pentaerythritol, dipentaerythritol, trimethylolethane, trimethylolbutane, di-trimethylolpropane and tri-trimethylolpropane. The carboxylic acids are preferably linear or branched fatty acids having 4 to 8 carbon atoms. The polyol esters may be partial esters, in which a part of the hydroxyl groups derived from the polyvalent alcohol remain as they are without being esterified, complete esters, in which all the hydroxyl groups have been esterified, or mixtures of the partial ester and the complete ester, and hydroxyl values thereof are preferably 10 mg-KOH/g or less, more preferably 5 mg-KOH/g or less, and most preferably 3 mg-KOH/g or less.

The polyalkylene glycols include polypropylene glycol, polyethylene glycol and copolymers of propylene oxide and ethylene oxide. Preferably, the terminal structure thereof is an alkyl group at least at one end, and particularly preferably a methyl group in terms of hygroscopicity. In addition, preferably either one of the terminal structures is an alkyl group and the other is a hydrogen atom, and particularly preferably one is a methyl group and the other is a hydrogen atom in terms of production facility and cost. Preferably, backbone thereof is a copolymer containing an oxyethylene group (EO) and an oxypropylene group (PO), and preferably the proportion which the oxyethylene group accounts for of the total of the oxyethylene group and the oxypropylene group (EO/PO + EO) ranges from 0.1 to 0.8, and more preferably from 0.3 to 0.6 in terms of lubricity. In addition, preferably the value of EO/(PO + EO) ranges from 0 to 0.5, more preferably ranges from 0 to 0.2, and most preferably is 0 (i.e., propylene oxide homopolymer) in terms of hygroscopicity and thermal/chemical stability.

The polyvinyl ethers have a structural unit represented by the following formula (2). The polyvinyl ethers in the present embodiment may be homopolymers, in which structural units thereof are the same as each other, or copolymers composed of two or more structural units, and the copolymers are preferred because the characteristics can be adjusted in a well-balanced manner by being copolymers. 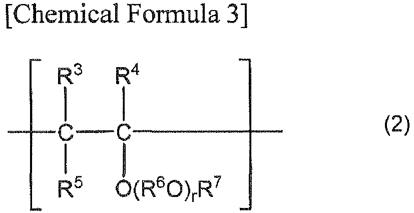 [R³, R⁴ and R⁵ may be the same as or different from each other and each represents a hydrogen atom or a hydrocarbon group having 1 to 8 carbon atoms; R⁶ represents a divalent hydrocarbon group having 1 to 10 carbon atoms or a divalent hydrocarbon group having 2 to 20 carbon atoms containing an ether linkage oxygen; R⁷ represents a hydrocarbon group having 1 to 20 carbon atoms; r represents a number such that the mean value for r in terms of whole the polyvinyl ether becomes from 0 to 10; each of the R³-R⁷ may be the same or different between the structural units; and when r is 2 or more in a structural unit, the plurality of R⁶O may be the same as or different from each other in the structural unit.]

In the present embodiment, the lubricating base oils described above may be used singly or in combinations of two or more thereof.

Preferably, the kinematic viscosity of the lubricating base oil at 40°C is from 3 to 1000 mm²/s, more preferably from 4 to 600 mm²/s, and still more preferably from 5 to 500 mm²/s. Preferably, the viscosity index of the lubricating base oil is 10 or more. It is noted that, as used herein, the kinematic viscosity at 40°C and the viscosity index refer to values determined according to JIS K2283, respectively.

Then, description will be made regarding the compound represented by the above formula (1) (hereinafter, also referred to as "sulfide compound").

In the formula (1), R¹ and R² may be the same as or different from each other and each represents a hydrocarbon group, and m, n, p and q may be the same as or different from each other and each represents an integer from 0 to 5 so that sums of m + n and p + q range from 0 to 5, respectively. However, at least either one of n or q is 1 or more, and those in which both of n and q are 1 are the most preferable. Also, t and u may be the same as or different from each other and each represents an integer from 0 to 10. Preferably, each of t and u is from 0 to 4, and those in which both of t and u are 0 or 1 are more preferable, and those in which both of t and u are 0 are the most preferable.

The preferred hydrocarbon groups include Cl to C10, preferably C1 to C6, alkyl groups, cycloalkyl groups, alkenyl groups and a phenyl groups, and specific examples thereof include methyl group, ethyl group, n-propyl group, i-propyl group, n-butyl group, sec-butyl group and tert-butyl group.

The preferred specific examples of the compounds represented by the formula (1) include 4,4'-thiobis(3-methyl-6-tert-butylphenol),
4,4'-thiobis(2,6-di-tert-butylphenol),
4,4'-thiobis(2-methyl-6-tert-butylphenol),
2,2'-thiobis(4-methyl-6-tert-butylphenol),
2,2'-thiobis(4,6-di-tert-butylphenol) and
bis(3,5-di-tert-butyl-4-hydroxybenzyl) sulfide.

The content of the sulfide compound is arbitrary, but is from 0.01 to 5.0% by mass, preferably from 0.05 to 3.0% by mass, and more preferably from 0.1 to 1.0% by mass based on the total amount of the refrigerating machine oil composition. Too small content thereof results in no effects and excessive content thereof leads to deteriorated stability to promote degradation of the refrigerating machine oil, thereby being unfavorable.

The refrigerating machine oil composition according to the present embodiment further comprises a phosphorus compound in addition to the sulfide compound.

Preferably, as the phosphorus compound according to the present embodiment, at least one selected from the group consisting of phosphates, thiophosphates, acidic phosphates, amine salts of acidic phosphates, chlorinated phosphates and phosphites is blended. These phosphorus compounds are esters of phosphoric acid or phosphonic acid and alkanols or polyether-type alcohols or derivatives thereof. The phosphorus compounds preferably used include the phosphates and the amine salts of acidic phosphates.

The phosphates include tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate and xylenyldiphenyl phosphate. The phosphates preferably used are triaryl phosphates, and particularly preferred are those in which the aryl groups have 7 to 9 carbon atoms.

The thiophosphates include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyldiphenyl phosphorothionate and xylenyldiphenyl phosphorothionate.

The amine salts of acidic phosphates include amine salts of acidic phosphates and primary to tertiary amines having linear or branched alkyl groups having 1 to 24 carbon atoms, preferably 5 to 18 carbon atoms.

The acidic phosphates constituting the amine salts of acidic phosphates include monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dihexadecyl acid phosphate, diheptadecyl acid phosphate, dioctadecyl acid phosphate and dioleyl acid phosphate. The acidic phosphates preferably used are dialkyl acid phosphates, and particularly preferred are those in which the alkyl groups have 4 to 8 carbon atoms.

The amines constituting the amine salts of acidic phosphates include amines such as linear or branched methylamine, ethylamine, propylamine, butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, oleylamine, tetracosylamine, dimethylamine, diethylamine, dipropylamine, dibutylamine, dipentylamine, dihexylamine, diheptylamine, dioctylamine, dinonylamine, didecylamine, diundecylamine, didodecylamine, ditridecylamine, ditetradecylamine, dipentadecylamine, dihexadecylamine, diheptadecylamine, dioctadecylamine, dioleylamine, ditetracosylamine, trimethylamine, triethylamine, tripropylamine, tributylamine, tripentylamine, trihexylamine, triheptylamine trioctylamine, trinonylamine, tridecylamine, triundecylamine, tridodecylamine, tritridecylamine, tritetradecylamine, tripentadecylamine, trihexadecylamine, triheptadecylamine, trioctadecylamine, trioleylamine and tritetracosylamine. The amine may be the single compound or a mixture of two or more of these compounds. The amines preferably used are monoalkylamines, and particularly preferred are those in which the alkyl group has 9 to 18 carbon atoms.

The chlorinated phosphates include tris(dichloropropyl) phosphate, tris(chloroethyl) phosphate, tris(chlorophenyl) phosphate and polyoxyalkylene bis[di(chloroalkyl)] phosphate. The phosphites include dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite and tricresyl phosphite. Mixtures of the above compounds may also be used.

Regarding the content of the phosphorus compound contained in the refrigerating machine oil composition according to the present embodiment, there is no particular restriction, but content thereof is preferably from 0.01 to 5.0% by mass, and more preferably from 0.02 to 3.0% by mass based on the total amount of the refrigerating machine oil composition (based on the total amount of the base oil and all the additives formulated). When the content of the phosphorus compound is 0.01% or more by mass, excellent lubricity can be ensured. It is noted that the above phosphorus compounds may be used singly or in combinations of two or more thereof.

The refrigerating machine oil composition according to the present embodiment may further contains other additives of various kinds besides the sulfide compound and the phosphorus compound. In addition, a terpene compound can be added to the refrigerating machine oil composition according to the present embodiment in order to further improve the thermal/chemical stability thereof. As used herein, "terpene compounds" refers to compounds formed by polymerization of isoprene or derivatives thereof, and from dimer to octamer of isoprene are preferably used. Specific examples of the terpene compounds include monoterpenes such as geraniol, nerol, linalool, citral (including geranial), citronellol, menthol, limonene, terpinerol, carvone, ionone, thujone, camphor and borneol; sesquiterpenes such as farnesene, farnesol, nerolidol, juvenile hormone, humulene, caryophyllene, elemen, cadinol, cadinene and tutin; diterpenes such as geranylgeraniol, phytol, abietic acid, pimaradiene, daphnetoxin, taxol, abietic acid and pimaric acid; sestaterpenes such as geranylfamesene; triterpenes such as squalene, limonin, camelliagenin, hopane and lanosterol; and tetraterpenes such as carotenoids.

Among these terpene compounds, monoterpenes, sesquiterpenes and diterpenes are preferred, sesquiterpenes are more preferred, and α-farnesene (3,7,11-trimethyldodeca-1,3,6,10-tetraene) and/or β-farnesene (7,11-dimethyl-3-methylidenedodeca-1,6,10-triene) are particularly preferred. In the present embodiment, the terpene compounds may be used singly or in combinations of two or more thereof.

Regarding the content of the terpene compound in the refrigerating machine oil composition according to the present embodiment, there is no particular restriction, but content thereof is preferably from 0.001 to 10% by mass, more preferably from 0.01 to 5% by mass, and still more preferably from 0.05 to 3% by mass based on the total amount of the refrigerating machine oil composition. When the content of the terpene compound is less than 0.001% by mass, the improving effect on the thermal/chemical stability tends to be insufficient, and when the content of the terpene compound exceeds 10% by mass, the lubricity tends to be insufficient. In addition, regarding the content of the terpene compound in the working fluid composition for a refrigerating machine according to the present embodiment, it is desirable to be selected so that content thereof based on the total amount of the refrigerating machine oil composition falls within the preferred range described above.

The refrigerating machine oil composition according to the present embodiment may also contain an epoxy compound in order to further improve the thermal/chemical stability thereof. The epoxy compound includes phenyl glycidyl ether-type epoxy compounds, alkyl glycidyl ether-type epoxy compounds, glycidyl ester-type epoxy compounds, aryloxirane compounds, alkyloxirane compounds, alicyclic epoxy compounds, epoxidized fatty acid monoesters and epoxidized vegetable oils.

Specific examples of the phenyl glycidyl ether-type epoxy compounds include phenyl glycidyl ether or alkylphenyl glycidyl ethers. The above alkylphenyl glycidyl ethers include those having from 1 to 3 alkyl groups having 1 to 13 carbon atoms, and among these alkylphenyl glycidyl ethers, the preferred examples include those having one alkyl group having 4 to 10 carbon atoms such as n-butylphenyl glycidyl ether, i-butylphenyl glycidyl ether, sec-butylphenyl glycidyl ether, tert-butylphenyl glycidyl ether, pentylphenyl glycidyl ether, hexylphenyl glycidyl ether, heptylphenyl glycidyl ether, octylphenyl glycidyl ether, nonylphenyl glycidyl ether and decylphenyl glycidyl ether.

Specific examples of the alkyl glycidyl ether-type epoxy compounds include alkyl glycidyl ethers such as decyl glycidyl ether, undecyl glycidyl ether, dodecyl glycidyl ether, tridecyl glycidyl ether, tetradecyl glycidyl ether and 2-ethylhexyl glycidyl ether; neopentyl glycol diglycidyl ether; trimethylolpropane triglycidyl ether; pentaerythritol tetraglycidyl ether; 1,6-hexanediol diglycidyl ether; sorbitol polyglycidyl ether; polyalkylene glycol monoglycidyl ether and polyalkylene glycol diglycidyl ether. As the alkyl glycidyl ethers, there may be used those having an alkyl group having 1 to 13 carbon atoms, particularly 4 to 10 carbon atoms.

Specific examples of the glycidyl ester-type epoxy compounds include phenyl glycidyl esters, alkyl glycidyl esters and alkenyl glycidyl esters, and preferred examples thereof include glycidyl 2,2-dimethyloctanoate, glycidyl benzoate, glycidyl acrylate and glycidyl methacrylate. As the alkyl glycidyl esters, there may be used those having an alkyl group having 4 to 18 carbon atoms, particularly 6 to 12 carbon atoms.

Specific examples of the aryloxirane compounds include 1,2-epoxystyrene and alkyl-1,2-epoxystyrenes.

Specific examples of the alkyloxirane compounds include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,1,2-epoxyoctadecane, 2-epoxynonadecane and 1,2-epoxyeicosane.

Specific examples of the alicyclic epoxy compounds include 1,2-epoxycyclohexane, 1,2-epoxycyclopentane, 3,4-epoxycyclohexylmethyl 3,4-epoxycyclohexanecarboxylate, bis(3,4-epoxycyclohexylmethyl) adipate, exo-2,3-epoxynorbornane, bis(3,4-epoxy-6-methylcyclohexylmethyl) adipate, 2-(7-oxabicyclo[4.1.0]hept-3-yl)-spiro(1,3-dioxane-5,3'-[7]oxabicyclo[4 .1.0]heptane, 4-(1'-methylepoxyethyl)-1,2-epoxy-2-methylcyclohexane and 4-epoxyethyl-1,2-epoxycyclohexane.

Specific examples of the epoxidized fatty acid monoesters include esters of epoxidized fatty acids having 12 to 20 carbon atoms and alcohols having 1 to 8 carbon atoms or phenols or alkylphenols. There are particularly preferably used butyl, hexyl, benzyl, cyclohexyl, methoxyethyl, octyl, phenyl and butylphenyl esters of epoxystearic acid.

Specific examples of the epoxidized vegetable oils include epoxidized compounds of vegetable oils such as soybean oil, linseed oil and cottonseed oil.

Among these epoxy compounds, those preferred include the phenyl glycidyl ether-type epoxy compounds, the glycidyl ester-type epoxy compounds, the alicyclic epoxy compounds and the epoxidized fatty acid monoesters. Among others, the phenyl glycidyl ether-type epoxy compounds and the glycidyl ester-type epoxy compounds are more preferred, and phenyl glycidyl ether, butylphenyl glycidyl ether, alkylglycidyl esters or mixtures thereof are particularly preferred.

When the refrigerating machine oil composition according to the present embodiment contains the epoxy compound described above, the content of the epoxy compound is not particularly restricted, but is preferably from 0.1 to 5.0% by mass, and more preferably from 0.2 to 2.0% by mass based on the total amount of the refrigerating machine oil composition. It is noted that the epoxy compounds described above may be used singly or in combinations of two or more thereof.

In addition, the refrigerating machine oil composition according to the present embodiment may contain a carbodiimide compound in order to further improve thermal/chemical stability thereof.

The carbodiimide compound includes compounds having the structure represented by the following formula (3):

R¹¹-N=C=N-R¹² (3)

[R¹¹ and R¹² may be the same as or different from each other and each represents a hydrogen atom, a hydrocarbon group, or a hydrocarbon group containing a nitrogen atom or an oxygen atom.]

Preferred examples of the carbodiimide compounds include compounds of the above formula (3) where each of R¹¹ and R¹² is a hydrogen atom, a linear or branched aliphatic hydrocarbon group having 1 to 12 carbon atoms, or an aromatic or aromatic-aliphatic hydrocarbon group having 6 to 18 carbon atoms. More specifically, the above-described carbodiimide compounds include compounds of the above formula (3) where each of R¹¹ and R¹² is a hydrogen atom; an alkyl group such as methyl group, ethyl group, n-propyl group, isopropyl group, n-butyl group, 1-methylpropyl group, 2-methylpropyl group, 3-methylpropyl group, n-pentyl group, 1-methylbutyl group, 2-methylbutyl group, 3-methylbutyl group, 4-methylbutyl group, 1,1.-dimethylpropyl group, 2,2-dimethylpropyl group, 1,2-dimethylpropyl group, 2,3-dimethylpropyl group, 1-ethylpropyl group, 2-ethylpropyl group, various hexyl groups, various heptyl groups, various octyl groups, 2-ethylhexyl group, various nonyl groups, various decyl groups, various undecyl groups and various dodecyl groups; an alkenyl group such as propenyl group, butenyl group, isobutenyl group, pentenyl group, 2-ethylhexenyl group and octenyl group; a cycloalkyl group such as cyclopentyl group, cyclohexyl group, methylcyclopentyl group and ethylcyclopentyl group; an aryl group such as phenyl group and naphthyl group; an aryl group such as alkyl-substituted phenyl groups such as toluyl group, isopropylphenyl group, diisopropylphenyl group, triisopropylphenyl group and nonylphenyl group; and an aralkyl group such as benzyl group and phenethyl group.

For each of R¹¹ and R¹² which the carbodiimide compounds have, the aliphatic hydrocarbon group is preferably an alkyl group having 3 to 6 carbon atoms, and the aromatic and the aromatic-aliphatic hydrocarbon group are preferably an aryl group and an alkyl-substituted phenyl group having 6 to 15 carbon atoms in terms of the effect of improving the stability in the presence of the unsaturated hydrofluorocarbon refrigerant. Specific examples of each of R¹¹ and R¹² include propyl group, isopropyl group, butyl group, isobutyl group, pentyl group, 2-methylbutyl group, hexyl group, phenyl group, toluyl group, isopropylphenyl group, diisopropylphenyl group and triisopropylphenyl group.

In addition, the carbodiimide compounds include those in which R¹¹ and R¹² in the formula (3) are substituents represented by the following formula (4). In this case, R¹¹ and R¹² may be the same as or different from each other. 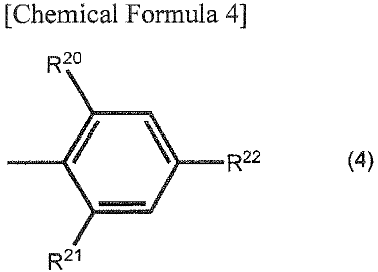 [each of R²⁰, R²¹ and R²² represents a hydrogen atom or an alkyl group having 1 to 10 carbon atoms. ]

In the above formula (4), each of R²⁰, R²¹ and R²² may be a hydrogen atom or an alkyl group having 1 to 10 carbon atoms, examples of which include a hydrogen atom, methyl group, ethyl group, propyl group, isopropyl group, butyl group, isobutyl group, tert-butyl group, pentyl group, isopentyl group, hexyl group, isohexyl group, heptyl group, isoheptyl group, octyl group, isooctyl group, 2-ethylhexyl group, nonyl group, isononyl group, 3,5,5-trimethylhexyl group, decyl group and isodecyl group. Preferably, each of R²⁰, R²¹ and R²² may be selected so that the sum of numbers of carbon atoms thereof is 12 or less, and particularly preferably may be a hydrogen atom, methyl, ethyl, propyl, isopropyl, butyl, isobutyl or tert-butyl group in terms of the effect of improving stability under the refrigerant atmosphere.

Further, there may also be used a carbodiimide compound having two or more of carbodiimide groups (-N=C=N-) within the molecule. Preferred examples of such the compounds include compounds represented by the following formula (5): 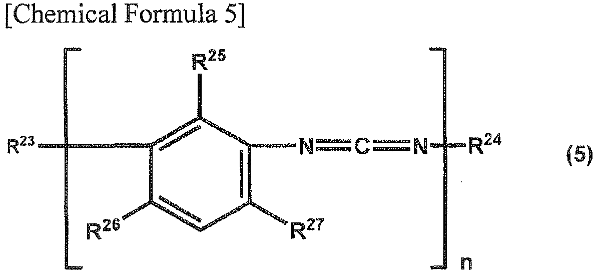 [R²³ represents a hydrogen atom or an alkyl group having 1 to 10 carbon atoms; R²⁴ represents a hydrogen atom, an alkyl group having 1 to 10 carbon atoms, or a group represented by the above formula (4), provided that the sum of the numbers of carbon atoms of R²⁰, R²¹ and R²² is 10 or less in the case of R²⁴ being the group represented by the above formula (4); R²⁵, R²⁶ and R²⁷ may be the same as or different from each other and each represents a hydrogen atom or an alkyl group having 1 to 10 carbon atoms, and the sum of the numbers of carbon atoms of R²⁵, R²⁶ and R²⁷ is 10 or less; and n is an integer of 2 or more.

It is noted when R²⁴ is the group represented by the above formula (4), the sum of the numbers of carbon atoms of R²⁰, R²¹ and R²² exceeding 10 tends to impair the solubility of the carbodiimide compound represented by the above formula (5) in the ether oils and the unsaturated hydrofluorocarbon refrigerants, thereby being unfavorable. Similarly, the sum of the numbers of carbon atoms of R²⁵, R²⁶ or R²⁷ exceeding 10 tends to impair the solubility of the carbodiimide compound represented by the above formula (5) in the ether oils and the unsaturated hydrofluorocarbon refrigerants, thereby being unfavorable.

Specific examples of the alkyl groups having 1 to 10 carbon atoms represented by R²⁰, R²¹, R²², R²⁵, R²⁶ or R²⁷ include methyl group, ethyl group, isopropyl group, propyl group, butyl group, isobutyl group, pentyl group, hexyl group, heptyl group, 2-ethylhexyl group, nonyl group and isodecyl group. Among others, methyl group, ethyl group, isopropyl group and propyl group are particularly preferred in terms of solubility of the carbodiimide compound represented by the above formula (5) in the ether compound-containing base oils and the unsaturated fluorinated hydrocarbon refrigerants.

In the above formula (5), n represents an integer of 2 or more. The more n is increased, the more the carbodiimide compound represented by the above formula (5) tends to impair solubility thereof in the ether compound-containing base oils and/or the unsaturated fluorinated hydrocarbon refrigerants, and therefore n is preferably from 2 to 6, and more preferably from 2 to 3.

Among the carbodiimide compounds represented by the above formula (5), those which are the most generally preferred are bis(isopropylphenyl) carbodiimide, bis(diisopropylphenyl) carbodiimide and bis(triisopropylphenyl) carbodiimide in terms of stability of a new oil (unused oil) or a degraded oil (used oil), compatibility, reactivity with acidic substances, and stability and compatibility of the reaction products with the acidic substances in the coexistence of the unsaturated fluorinated hydrocarbon refrigerant.

The content of the carbodiimide compound is arbitrary, but is preferably from 0.005 to 3% by mass, more preferably from 0.007 to 1% by mass, and most preferably from 0.01 to 0.1% by mass based on the total amount of the refrigerating machine oil.

The refrigerating machine oil composition according to the present embodiment may also contain the conventionally known additives for refrigerating machine oils as necessary in order to further enhance performance thereof. Examples of such additives include phenolic antioxidants such as di-tert-butyl-p-cresol and bisphenol A; amine antioxidants such as phenyl-α-naphthylamine and N,N-di(2-naphthyl)-p-phenylenediamine; anti-wear agents such as zinc dithiophosphate; extreme-pressure agents such as chlorinated paraffins and sulfur compounds; oiliness agents such as fatty acids; antifoaming agents such as those of silicone type; metal deactivators such as benzotriazole; viscosity index improvers; pour point depressants and detergent dispersants. These additives may be used singly or in combinations of two or more thereof. The content of such additives is not particularly restricted, but is preferably 10% or less by mass, and more preferably 5% or less by mass based on the total amount of the refrigerating machine oil composition.

The kinematic viscosity of the refrigerating machine oil composition according to the present embodiment is not particularly limited, but kinematic viscosity thereof at 40°C may be preferably from 3 to 1000 mm²/s, more preferably from 4 to 600 mm²/s, and most preferably from 5 to 500 mm²/s. Kinematic viscosity thereof at 100°C may be preferably from 1 to 100 mm²/s, and more preferably from 2 to 50 mm²/s. Lubricity tends to be insufficient when the kinematic viscosity is less than the lower limit described above, while the compatibility with a difluoromethane refrigerant tends to be insufficient when the kinematic viscosity exceeds the upper limit described above.

The volume resistivity of the refrigerating machine oil composition according to the present embodiment is not particularly limited, but may be preferably 1.0 x 10¹⁰ Ω·m or more, more preferably 1.0 x 10¹¹ Ω·m or more, and most preferably 1.0 x 10¹² Ω·m or more. In particular, high electric insulation tends to be required when the refrigerating machine oil composition is used in closed type refrigerating machines. It is noted, as used herein, the volume resistivity refers to value thereof determined at 25°C according to JIS C2101, "Testing method for electrical insulating oil."

The moisture content in the refrigerating machine oil composition according to the present embodiment is not particularly limited, but may be preferably 200 ppm or less, more preferably 100 ppm or less, and most preferably 50 ppm or less based on the total amount of the refrigerating machine oil composition. Particularly in the case for use in closed type refrigerating machines, a lower moisture content is required in terms of an influence on the thermal/chemical stability and electrical insulation of the refrigerating machine oil composition.

The acid value of the refrigerating machine oil composition according to the present embodiment is not particularly limited, but may be preferably 0.1 mgKOH/g or less, and more preferably 0.05 mgKOH/g or less in order to prevent corrosion of metals used in the refrigerating machines or piping. It is noted, as used herein, the acid value refers to that determined according to JIS K2501, "Petroleum products and lubricant oils - Testing method for neutralization number."

The ash content of the refrigerating machine oil composition according to the present embodiment is not particularly limited, but may be preferably 100 ppm or less, and more preferably 50 ppm or less in order to enhance the thermal/chemical stability of the refrigerating machine oil composition according to the present embodiment, thereby suppressing generation of sludge and the like. It is noted, as used herein, the ash content refers to that determined according to JIS K2272, "Testing method for ash content and sulfates ash content in crude oil and petroleum products."

### [Second embodiment: working fluid composition for refrigerating machine]

The working fluid composition for a refrigerating machine according to the second embodiment of the present invention comprises a lubricating base oil, a compound (sulfide compound) represented by the above formula (1), a phosphorus compound and an unsaturated hydrofluorocarbon refrigerant. It is noted that the working fluid composition for a refrigerating machine according to the present embodiment includes an aspect where the refrigerating machine oil composition according to the first embodiment described above and an unsaturated hydrofluorocarbon refrigerant are contained. In addition, in the present embodiment the lubricating base oil, the compound represented by the above formula (1), the phosphorus compound and the other additives, the physical properties of the refrigerating machine oil composition and the like are the same as those in the case of the first embodiment, and therefore the overlapping description will be omitted here. It is desirable to select the content of each additive in the working fluid composition for a refrigerating machine so that the reduced value based on the refrigerating machine oil falls within the preferred range described in the first embodiment.

Regarding the unsaturated hydrofluorocarbon refrigerants, those having 2 to 5 carbon atoms are preferably used, and among others the refrigerants having 3 carbon atoms (fluoropropene refrigerants) are preferably used. Preferably, the fluoropropene refrigerant is that having 3 to 5 fluorine atoms, and preferably is either one or a mixture of two or more of 1,2,3,3,3-pentafluoropropene (HFO-1225ye), 1,3,3,3-tetrafluoropropene (HFO-1234ze), 2,3,3,3-tetrafluoropropene (HFO-1234yf), 1,2,3,3-tetrafluoropropene (HFO-1234ye) and 3,3,3-trifluoropropene (HFO-1243zf). In terms of physical properties of the refrigerant, the fluoropropene refrigerant is preferably one or more selected from among HFO-1225ye, HFO-1234ze and HFO-1234yf.

The refrigerant used in the present embodiment may also be a mixed refrigerant of the unsaturated hydrofluorocarbon refrigerant and another refrigerant. The other refrigerants include HFC refrigerants, fluorine-containing ether refrigerants such as perfluoroethers, and natural refrigerants such as dimethyl ether, ammonia and hydrocarbons.

The HFC refrigerants include hydrofluorocarbons having 1 to 3 carbon atoms, and preferably 1 to 2 carbon atoms. Specific examples of the hydrofluorocarbons described above include difluoromethane (HFC-32), trifluoromethane (HFC-23), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-23 6fa), 1,1,1,3,3-pentafluoropropane (HFC-245fa) and 1,1,1,3,3-pentafluorobutane (HFC-365mfc), or mixtures of two or more thereof. These refrigerants may be suitably selected depending on the use and the required performance, and preferred examples thereof include HFC-32 alone; HFC-23 alone; HFC-134a alone; HFC-125 alone; HFC-134a/HFC-32 = 60-80% by mass/40-20% by mass mixture; HFC-32/HFC-125 = 40-70% by mass/60-30% by mass mixture; HFC-125/HFC-143a = 40-60% by mass/60-40% by mass mixture; HFC-134a/HFC-32/HFC-125 = 60% by mass/30% by mass/10% by mass mixture; HFC-134a/HFC-32/HFC-125 = 40-70% by mass/15-35% by mass/5-40% by mass mixture; and HFC-125/HFC-134a/HFC-143a = 35-55% by mass/1-15% by mass/40-60% by mass mixture. More specific examples thereof include HFC-134a/HFC-32 = 70/30% by mass mixture; HFC-32/HFC-125 = 60/40% by mass mixture; HFC-32/HFC-125 = 50/50% by mass mixture (R410A); HFC-32/HFC-125 = 45/55% by mass mixture (R410B); HFC-125/HFC-143a = 50/50% by mass mixture (R507C); HFC-32/HFC-125/HFC-134a = 30/10/60% by mass mixture; HFC-32/HFC-125/HFC-134a = 23/25/52% by mass mixture (R407C); HFC-32/HFC-125/HFC-134a = 25/15/60% by mass mixture (R407E); and HFC-125/HFC-134a/HFC-143a = 44/4/52% by mass mixture (R404A).

In addition, among the HFC refrigerants, the saturated hydrofluorocarbon is preferably one or a mixture of two or more of difluoromethane (HFC-32), pentafluoroethane (HFC-125), 1,1,2,2-tetrafluoroethane (HFC-134), 1,1,1,2-tetrafluoroethane (HFC-134a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa) and 1,1,1,3,3-pentafluorobutane (HFC-365 mfc), and is further preferably HFC-32, HFC-125, HFC-134a, HFC-152a or a mixtures of HFC-32 and HFC-134a in terms of physical properties of the refrigerant. Among others, HFC-32 is particularly preferred in terms of low global warming potential and efficiency.

Preferably, the hydrocarbon refrigerants are hydrocarbons having 3 to 5 carbon atoms, and specific examples thereof include methane, ethylene, ethane, propylene, propane, cyclopropane, n-butane, isobutane, cyclobutane, methylcyclopropane, 2-methylbutane, n-pentane, and mixtures of two or more thereof. Among these refrigerants, those in a gas state at 25°C and 1 atmosphere are preferably used, and preferred are propane, n-butane, isobutane, 2-methylbutane or mixtures thereof.

Specific examples of the fluorine-containing ether refrigerants include HFE-134p, HFE-245mc, HFE-236mf, HFE-236me, HFE-338mcf, HFE-365mcf, HFE-245mf, HFE-347mmy, HFE-347mcc, HFE-125, HFE-143m, HFE-134m and HFE-227me, and these refrigerants may be suitably selected depending on the use and the required performance.

When the refrigerant used in the present embodiment is a mixed refrigerant, such the mixed refrigerant preferably contains at least one selected from among the unsaturated fluorocarbon refrigerants (hereinafter, referred to as "refrigerant (A)") and at least one selected from among saturated hydrofluorocarbon refrigerants, hydrocarbon refrigerants having 3 to 5 carbon atoms, dimethyl ether refrigerant, carbon dioxide refrigerant, bis(trifluoromethyl) sulfide refrigerant and trifluoroiodomethane refrigerant (hereinafter, referred to as "refrigerant (B)").

When the refrigerant used in the present embodiment is the mixed refrigerant containing the refrigerant (A) and the refrigerant (B), preferably the mixed refrigerant is an azeotropic mixture, but it is not necessary to be an azeotropic mixture so long as it has the properties required as the refrigerant, and the mixing ratio of the both components is preferably from 1:99 to 99:1, and more preferably from 5:95 to 95:5.

Further, when the refrigerant used in the present embodiment is the mixed refrigerant containing the refrigerant (A) and the refrigerant (B), the mixed refrigerant may further contain an HFC refrigerant other than the unsaturated hydrofluorocarbon refrigerants or the saturated hydrofluorocarbons, a fluorine-containing ether refrigerant such as a perfluoroether, or a natural refrigerant such as a hydrocarbon other than the saturated hydrocarbon having 3 to 5 carbon atoms or ammonia.

There is no particular restriction on the blending ratio of the refrigerating machine oil composition and the refrigerant in the working fluid composition for a refrigerating machine according to the present embodiment, but the ratio is preferably from 1 to 500 parts by mass, and more preferably from 2 to 400 parts by mass of the refrigerating machine oil composition with respect to 100 parts by mass of the refrigerant.

The working fluid composition for a refrigerating machine according to the present embodiment is preferably used in an air conditioner or a refrigerator equipped with a reciprocating or rotating closed type compressor, or in an open or closed type automobile air conditioner. The refrigerating machine oil composition and the working fluid composition for a refrigerating machine according to the present embodiment may also be preferably used in cooling devices for dehumidifiers, water heaters, freezers, cold storage/refrigerated warehouses, automatic vending machines, showcases, chemical plants and the like. Furthermore, the refrigerating machine oil composition and the working fluid composition for a refrigerating machine according to the present embodiment may also be preferably used in devices equipped with a centrifugal compressor.

The fluid composition for a refrigerating machine according to the present embodiment may be suitably used in various refrigerating machines for unsaturated fluorinated hydrocarbon refrigerants as described above, and examples of typical constitutions of a refrigerant circulation cycle provided in the refrigerating machine includes those having a compressor, a condenser, an expansion mechanism and an evaporator and, if necessary, a desiccator.

Examples of the compressor include a high-pressure container-type compressor in which a motor composed of a rotor and a stator, a rotation axis fitted in the rotor, and a compressor part that is linked to the motor via the rotation axis are housed in a sealed container storing a refrigerating machine oil composition and a high-pressure refrigerant gas discharged from the compressor part is retained in the sealed container, and a low-pressure container-type compressor in which a motor composed of a rotor and a stator, a rotation axis fitted in the rotor, and a compressor part linked to the motor via the rotation axis are housed in a sealed container storing a refrigerating machine oil composition and a high-pressure refrigerant gas discharged from the compressor part is directly ejected out of the sealed container.

As the insulating film, which is an electrical insulating system material in the motor part, there may be preferably used crystalline plastic films with a glass transition point of 50°C or higher, of which specific examples are insulating films formed of at least one plastics selected from the group consisting of polyethylene terephthalate, polybutylene terephthalate, polyphenylene sulfide, polyetheretherketone, polyethylene naphthalate, polyamideimide and polyimide, or alternatively composite films in which a film with a low glass transition temperature is covered with a resin layer with a high glass transition temperature, because these films hardly cause degradation of the tensile strength properties and the electrical insulation properties. In addition, as the magnet wire used in the motor part, there may be preferably used one having an enamel coating with a glass transition temperature of 120°C or higher, such as a single layer formed of polyester, polyesteramide, polyamide or polyamideimide, or an enamel coating that is a composite coating having a lower layer with a low glass transition temperature and a upper layer with a high glass transition temperature. The enamel wire covered with the composite coating include that having a lower layer formed of polyesteramide and an upper layer formed of polyamideimide coated on the lower layer (AI/EI) and that having a lower layer formed of polyester and a upper layer formed of polyamideimide coated on the lower layer (AI/PE).

As the desiccants to be packed into the desecrator, there are preferably used synthetic zeolites formed of alkali metal silicate-aluminate complex salts having a pore size of less than 3.3 angstroms and a carbon dioxide gas absorption volume of less than or equal to 1.0% at a carbon dioxide gas partial pressure of 250 mmHg at 25°C. Specific examples of the synthetic zeolites include XH-9, XH-10, XH-11 and XH-600, trade names of Union Showa, K.K.

### Examples

Hereinafter, the present invention will be more specifically illustrated based on Examples and Comparative Examples, but the present invention is in no way limited to the following Examples.

### [Examples 1-12 and Comparative Examples 1-14]

In each of Examples 1-12 and Comparative Examples 1-14, each of the base oils 1-6 and the additives 1-11 described below were used to prepare a sample oil. The properties of each resulting sample oil are presented below. It is noted that the acid values for all of the respective sample oils before testing were 0.01 mgKOH/g.

### (Base oils)

Base oil 1: polyetylenepropylene glycol monomethyl ether (kinematic viscosity at 40°C: 73.2 mm²/s, weight average molecular weight: 1700)
Base oil 2: polypropylene glycol dimethyl ether (kinematic viscosity at 40°C: 46.5 mm²/s, weight average molecular weight: 1100)
Base oil 3: polyvinyl ether (kinematic viscosity at 40°C: 66.4 mm²/s, weight average molecular weight: 910)
Base oil 4: a tetraester of pentaerythritol and 2-ethylhexanoic acid/3,5,5-trimethylhexanoic acid (50/50 mol%) (kinematic viscosity at 40°C: 68.3 mm²/s)
Base oil 5: a naphthenic mineral oil (kinematic viscosity at 40°C: 31.0 mm²/s)
Base oil 6: a linear-type alkylbenzene (kinematic viscosity at 40°C: 8.2 mm²/s)

### (Additives)

Additive 1: 4,4'-thiobis(3-methyl-6-tert-butylphenol)
Additive 2: 4,4'-thiobis(2,6-di-tert-butylphenol)
Additive 3: bis(3,5-di-tert-butyl-4-hydroxybenzyl)sulfide
Additive 4: a mono (C₁₁-C₁₄ mixed alkyl) amine salt of dihexyl acid phosphate
Additive 5: tricresyl phosphate
Additive 6: 2,6-di-tert-butyl-p-cresol
Additive 7: p-tert-butylphenyl glycidyl ether
Additive 8: 2-ethylhexyl glycidyl ether
Additive 9: glycidyl-2,2-dimethyloctanoate
Additive 10: 4,4'-thiobis(2,6-di-tert-butylphenol)
Additive 11: 4,4'-methylenebis(3-methyl-6-tert-butylphenol)

Then, the following tests were carried out for each sample oil of Examples 1-12 and Comparative Examples 1-14.

### (Evaluation of thermal/chemical stability)

In a 200 ml autoclave made of stainless steel, 30 g of each sample oil of which moisture content had been adjusted to 100 ppm or less by mass (initial hue L0.5), 30 g of 2,3,3,3-tetrafluoropropene and catalysts (wires of iron, copper and aluminum) were sealed, followed by being heated to 175°C and being kept at the temperature for two weeks. After the testing, the acid value was determined for each refrigerating machine oil composition. The results obtained are presented in Tables 1 to 5.

### (Lubricity evaluation)

According to ASTM D2670, the testing was carried out at an oil temperature of 80°C with a load of 250LB for 1 hour, while 2,3,3,3-tetrafluoropropene (10 L/h) being blown into the sample oil, and after the testing the wear amount of the pin was determined. The results obtained are presented in Tables 1 to 5.

**[Table 1]**

| Component | No. | Example 1 | Example 2 | Example 3 | Example 4 | Example 5 | Example 6 |
|---|---|---|---|---|---|---|---|
| Base oil (% by mass) | Base oil 1 | 98.47 | | | | | |
| | Base oil 2 | | 98.47 | | | | |
| | Base oil 3 | | | 98.47 | | | |
| | Base oil 4 | | | | 98.0 | | |
| | Base oil 5 | | | | | 98.0 | |
| | Base oil 6 | | | | | | 98.0 |
| Additive (% by mass) | Additive 1 | 1.0 | | | | 1.0 | |
| | Additive 2 | | 1.0 | | 1.0 | | 1.0 |
| | Additive 3 | | | 1.0 | | | |
| | Additive 4 | 0.03 | 0.03 | 0.03 | | | |
| | Additive 5 | | | | 0.5 | 0.5 | 0.5 |
| | Additive 6 | 0.5 | | 0.5 | | 0.5 | |
| | Additive 7 | | 0.5 | | | | |
| | Additive 8 | | | | 0.5 | | |
| | Additive 9 | | | | | | 0.5 |
| | Additive 10 | | | | | | |
| | Additive 11 | | | | | | |
| Stability | Acid value (mgKOH/g) | 0.14 | 0.07 | 0.13 | 0.11 | 0.17 | 0.16 |
| Lubricity | mg | 1.1 | 1.3 | 1.4 | 1.5 | 1.7 | 1.2 |

**[Table 2]**

| Component | No. | Example 7 | Example 8 | Example 9 | Example 10 | Example 11 | Example 12 |
|---|---|---|---|---|---|---|---|
| Base oil (% by mass) | Base oil 1 | 97.97 | | | | | |
| | Base oil 2 | | 97.97 | | | | |
| | Base oil 3 | | | 97.97 | | | |
| | Base oil 4 | | | | 97.5 | | |
| | Base oil 5 | | | | | 97.5 | |
| | Base oil 6 | | | | | | 97.5 |
| Additive (% by mass) | Additive 1 | 1.0 | | | | 1.0 | |
| | Additive 2 | | 1.0 | | 1.0 | | 1.0 |
| | Additive 3 | | | 1.0 | | | |
| | Additive 4 | 0.03 | 0.03 | 0.03 | | | |
| | Additive 5 | | | | 0.5 | 0.5 | 0.5 |
| | Additive 6 | 0.5 | 0.5 | 0.5 | 0.5 | 0.5 | 0.5 |
| | Additive 7 | 0.5 | | | 0.5 | | |
| | Additive 8 | | 0.5 | | | 0.5 | |
| | Additive 9 | | | 0.5 | | | 0.5 |
| | Additive 10 | | | | | | |
| | Additive 11 | | | | | | |
| Stability | Acid value (mgKOH/g) | 0.10 | 0.05 | 0.09 | 0.09 | 0.14 | 0.12 |
| Lubricity | mg | 1.2 | 1.5 | 1.7 | 1.6 | 1.9 | 1.5 |

**[Table 3]**

| Component | No. | Comp. Example 1 | Comp. Example 2 | Comp. Example 3 | Comp. Example 4 | Comp. Example 5 | Comp. Example 6 |
|---|---|---|---|---|---|---|---|
| Base oil (% by mass) | Base oil 1 | 99.5 | | | | | |
| | Base oil 2 | | | | 98.5 | | |
| | Base oil 3 | | 99.5 | | | | |
| | Base oil 4 | | | | | 98.5 | |
| | Base oil 5 | | | 99.5 | | | 98.5 |
| | Base oil 6 | | | | | | |
| Additive (% by mass) | Additive 1 | 0.5 | 0.5 | 0.5 | | | 1.0 |
| | Additive 2 | | | | 1.0 | 1.0 | |
| | Additive 3 | | | | | | |
| | Additive 4 | | | | | | |
| | Additive 5 | | | | | | |
| | Additive 6 | | | | 0.5 | | |
| | Additive 7 | | | | | 0.5 | |
| | Additive 8 | | | | | | 0.5 |
| | Additive 9 | | | | | | |
| | Additive 10 | | | | | | |
| | Additive 11 | | | | | | |
| Stability | Acid value (mgKOH/g) | 0.12 | 0.15 | 0.09 | 0.12 | 0.04 | 0.08 |
| Lubricity | mg | 2.1 | 2.3 | 2.7 | 2.1 | 2.1 | 2.5 |

**[Table 4]**

| Component | No. | Comp. Example 7 | Comp. Example 8 | Comp. Example 9 | Comp. Example 10 | Comp. Example 11 | Comp. Example 12 |
|---|---|---|---|---|---|---|---|
| Base oil (% by mass) | Base oil 1 | 99.0 | 99.5 | 99.5 | 99.5 | | |
| | Base oil 2 | | | | | | |
| | Base oil 3 | | | | | | |
| | Base oil 4 | | | | | 99.0 | 99.5 |
| | Base oil 5 | | | | | | |
| | Base oil 6 | | | | | | |
| Additive (% by mass) | Additive 1 | | | | | | |
| | Additive 2 | | | | | | |
| | Additive 3 | | | | | | |
| | Additive 4 | | | | | | |
| | Additive 5 | 1.0 | | | | 1.0 | |
| | Additive 6 | | 0.5 | | | | 0.5 |
| | Additive 7 | | | | | | |
| | Additive 8 | | | | | | |
| | Additive 9 | | | | | | |
| | Additive 10 | | | 0.5 | | | |
| | Additive 11 | | | | 0.5 | | |
| Stability | Acid value (mgKOH/g) | 1.45 | 0.28 | 2.12 | 0.25 | 0.24 | 0.11 |
| Lubricity | mg | 4.3 | 13.4 | 14.2 | 17.6 | 3.1 | 9.8 |

**[Table 5]**

| Component | No. | Comp. Example 13 | Comp. Example 14 |
|---|---|---|---|
| Base oil (% by mass) | Base oil 1 | | |
| | Base oil 2 | | |
| | Base oil 3 | | |
| | Base oil 4 | 99.5 | 99.5 |
| | Base oil 5 | | |
| | Base oil 6 | | |
| Additive (% by mass) | Additive 1 | | |
| | Additive 2 | | |
| | Additive 3 | | |
| | Additive 4 | | |
| | Additive 5 | | |
| | Additive 6 | | |
| | Additive 7 | | |
| | Additive 8 | | |
| | Additive 9 | | |
| | Additive 10 | 0.5 | |
| | Additive 11 | | 0.5 |
| Stability | Acid value (mgKOH/g) | 1.87 | 0.08 |
| Lubricity | mg | 10.3 | 10.3 |

## Claims

1. A refrigerating machine oil composition comprising:
a lubricating base oil;
a compound represented by the following formula (1): 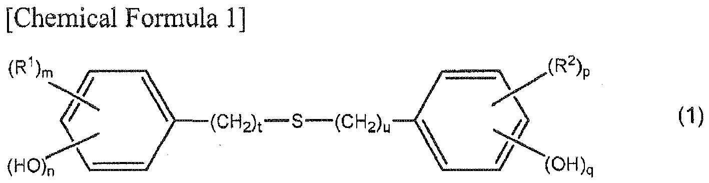 [R¹ and R² may be the same as or different from each other and each represents a hydrocarbon group; m, n, p and q may be the same as or different from each other and each represents an integer from 0 to 5 so that sums of m + n and p + q range from 0 to 5, respectively, with the proviso that at least either one of n or q is 1 or more; and t and u may be the same as or different from each other and each represents an integer from 0 to 10]; and
a phosphorus compound,
the refrigerating machine composition being used with an unsaturated hydrofluorocarbon refrigerant.

2. The refrigerating machine oil composition according to claim 1, wherein t and u are 0 in the formula (1).

3. The refrigerating machine oil composition according to claim 1 or 2, wherein the phosphorus compound is at least one selected from the group consisting of phosphates, thiophosphates, acidic phosphates, amine salts of acidic phosphates, chlorinated phosphates and phosphites.

4. A working fluid composition for a refrigerating machine, comprising:
a lubricating base oil;
a compound represented by the following formula (1): 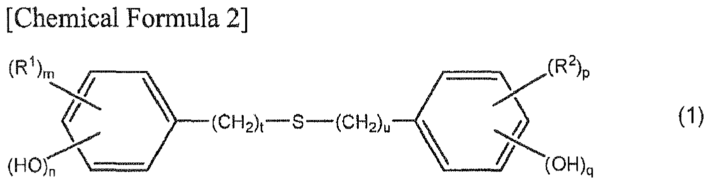 [R¹ and R² may be the same as or different from each other and each represents a hydrocarbon group; m, n, p and q may be the same as or different from each other and each represents an integer from 0 to 5 so that sums of m + n and p + q range from 0 to 5, respectively, with the proviso that at least either one of n or q is 1 or more; and t and u may be the same as or different from each other and each represents an integer from 0 to 10];
a phosphorus compound; and
an unsaturated hydro fluorocarbon refrigerant.

5. The working fluid composition for a refrigerating machine according to claim 4, wherein t and u are 0 in the formula (1).

6. The working fluid composition for a refrigerating machine according to claim 4 or 5, wherein the phosphorus compound is at least one selected from the group consisting of phosphates, thiophosphates, acidic phosphates, amine salts of acidic phosphates, chlorinated phosphates and phosphites.
